# EUROPEAN PATENT APPLICATION

(11) **EP 3 783 381 A1**
(43) Date of publication of application: **24.02.2021**
(21) Application number: 19788299.6
(22) Date of filing: 25.01.2019
(51) Int. Cl.: G01S 7/02, G01S 13/93

(54) **ELECTRONIC DEVICE, METHOD FOR CONTROLLING ELECTRONIC DEVICE, AND PROGRAM FOR CONTROLLING ELECTRONIC DEVICE**

(30) Priority: 19.04.2018 JP 2018080867
(71) Applicant: Kyocera Corporation, Kyoto-shi, Kyoto 612-8501 (JP)
(72) Inventor: SAHARA, Tooru, Kyoto-shi, Kyoto 612-8501 (JP); NISHIKIDO, Masamitsu, Kyoto-shi, Kyoto 612-8501 (JP); OOTSUKI, Yutaka, Kyoto-shi, Kyoto 612-8501 (JP)
(74) Representative: Viering, Jentschura & Partner mbB Patent- und Rechtsanwälte
(86) International application number: PCT/JP2019/002533
(87) International publication number: WO 2019/202802

(57) **Abstract**

Provided is an electronic device comprising a controller configured to control so that a first mode in which the number of antennas used for transmitting a transmission wave and receiving a reflected wave is a first predetermined number and a second mode in which the number of antennas used for transmitting a transmission wave and receiving a reflected wave is a second predetermined number that is larger than the first predetermined number can be switched. The controller controls to switch to the second mode when the object is detected within a predetermined distance in the first mode.

## Description

### CROSS-REFERENCE TO RELATED APPLICATION

This application claims priority to and benefit of Japanese Patent Application No. 2018-080867 filed on April 19, 2018, the entire contents of which are incorporated herein by reference.

### TECHNICAL FIELD

This disclosure relates to an electronic device, a control method of the electronic device and a control program of the electronic device.

### BACKGROUND

For example, in the field of industries related to automobile components such as the automobile industry, an importance is put on a technique of measuring a distance between an own vehicle and an object. In recent years, with the development of a technique that assists a driver in driving and a technique related to automatic driving that automates a part or all of driving, it is expected that an importance of the above described technique of measuring a distance will be increased. As such a technique of measuring a distance, for example, Patent Literature 1 (PTL 1) discloses a drive assist system that measures a distance between an own vehicle and a surrounding vehicle using a millimeter wave radar. Similar to the measurement of a distance, for example, an importance is also put on a technique of measuring an azimuth of an own vehicle with respect to an object such as another vehicle. Further, for example, Patent Literature 2 (PTL 2) discloses a method of setting an orientation of an antenna when installing the antenna.

### CITATION LIST

### Patent Literature

PLT 1: JP2009-059200A
PLT 2: JPH11-133144A

### SUMMARY

An electronic device according to an embodiment includes a transmitter, a receiver and a controller.

The transmitter transmits a transmission wave.

The receiver receives a reflected wave of the transmission wave reflected by an object.

The controller controls so that a first mode in which the number of antennas used for transmitting the transmission wave and receiving the reflected wave is a first predetermined number and a second mode in which the number of antennas is a second predetermined number that is larger than the first predetermined number can be switched.

Further, the controller controls to switch to the second mode when the object is detected within a predetermined distance in the first mode.

A control method of the electronic device according to an embodiment includes a transmission step, a reception step and a control step.

The transmission step transmits a transmission wave.

The reception step receives a reflected wave of the transmission wave reflected by an object.

The control step controls so that a first mode in which the number of antennas used for transmitting the transmission wave and receiving the reflected wave is a first predetermined number and a second mode in which the number of antennas is a second predetermined number that is larger than the first predetermined number can be switched.

Further, the control step controls to switch to the second mode when the object is detected within a predetermined distance in the first mode.

A control program of the electronic device according to an embodiment causes a computer to execute a transmission step, a reception step and a control step.

The transmission step transmits a transmission wave.

The reception step receives a reflected wave of the transmission wave reflected by an object.

The control step controls so that a first mode in which the number of antennas used for transmitting the transmission wave and receiving the reflected wave is a first predetermined number and a second mode in which the number of antennas is a second predetermined number that is larger than the first predetermined number can be switched.

Further, the control step controls to switch to the second mode when the object is detected within a predetermined distance in the first mode.

### BRIEF DESCRIPTION OF THE DRAWINGS

In the accompanying drawings:
FIG. 1 is a diagram illustrating a usage mode of an electronic device according to an embodiment;
FIG. 2 is a diagram illustrating sensors and transmission waves according to an embodiment;
FIG. 3 is a function block diagram schematically illustrating a configuration of the electronic device according to an embodiment;
FIG. 4 is a function block diagram schematically illustrating a configuration of a sensor according to an embodiment;
FIG. 5 is a diagram illustrating a virtual array antenna configured with a sensor according to an embodiment; and
FIG. 6 is a flowchart illustrating an operation of the electronic device according to an embodiment.

### DETAILED DESCRIPTION

In the above described azimuth measurement technique, convenience can be increased if the measurement efficiency can be improved without lowering the desired measurement accuracy. This disclosure relates to providing an electronic device that enhances the convenience when the azimuth is measured, a control method of the electronic device and a control program of the electronic device. According to an embodiment, an electronic device that enhances the convenience when the azimuth is measured, a control method of the electronic device and a control program of the electronic device can be provided. An embodiment will be described in detail below with reference to the drawings.

The electronic device according to an embodiment measures, by a sensor installed on a vehicle such as an automobile, the azimuth from the sensor with respect to an object that exists around the sensor, for example. The sensor transmits a transmission wave such as a radio wave, for example, as a detection wave. Further, the sensor receives a reflected wave of the transmission wave reflected by the object. The electronic device according to an embodiment measures the azimuth from the sensor with respect to the object based on the transmission wave transmitted by the sensor and the reception wave received by the sensor.

Hereinafter, as a typical example, a configuration in which the electronic device according to an embodiment is mounted on an automobile such as a passenger car will be described. However, the electronic device according to an embodiment is mounted not only on automobiles, but also on various moving bodies such as buses, trucks, bikes, bicycles, ships, aircrafts, passengers and the like. Further, the electronic device according to an embodiment is mounted not only on a moving body that moves by itself. In the electronic device according to an embodiment, the azimuth from the sensor with respect to the object can be measured in a situation where at least one of the sensor and the object can move. Further, the electronic device according to an embodiment can, of course, measure the azimuth from the sensor with respect to the object even if both of the sensor and the object are stationary.

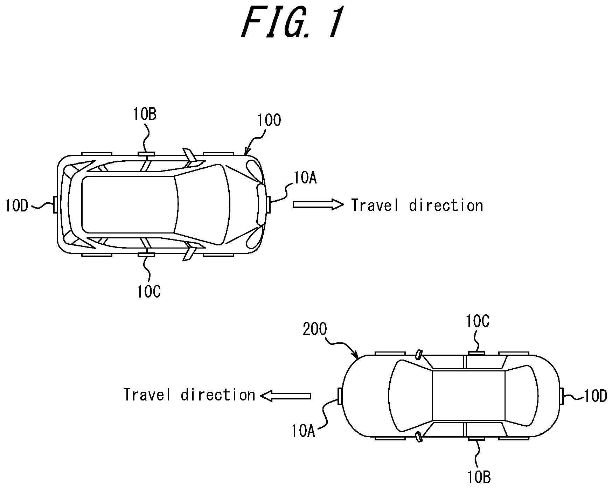

FIG. 1 is a diagram illustrating a usage mode of an electronic device according to an embodiment. FIG. 1 illustrates an example where a sensor according to an embodiment is mounted on an automobile vehicle.

Sensors according to an embodiment are installed on each of a vehicle 100 and a vehicle 200 illustrated in FIG. 1. Although each of the vehicle 100 and the vehicle 200 illustrated in FIG. 1 may be an automobile vehicle such as a passenger car, they may be any type of vehicle. In FIG. 1, the vehicle 100 and the vehicle 200 may move in the travel direction indicated by arrows or may be stationary without moving.

As illustrated in FIG. 1, the vehicle 100 and the vehicle 200 are each provided with a sensor 10A, a sensor 10B, a sensor 10C and a sensor 10D. The sensor 10A is installed in front of each of the vehicle 100 and the vehicle 200. The sensor 10B is installed on the left side of each of the vehicle 100 and the vehicle 200. The sensor 10C is installed on the right side of each of the vehicle 100 and the vehicle 200. The sensor 10D is installed on the back of each of the vehicle 100 and the vehicle 200. In the following description, each of the sensor 10A, the sensor 10B, the sensor 10C and the sensor 10D will be simply referred to as "sensor 10" unless they are distinguished from each other. It is to be noted that, when the sensors 10 are installed on a vehicle, the positions thereof are not limited to those illustrated in FIG. 1, and the sensors 10 may be appropriately installed on other positions.

When the vehicles 100 and 200 are each provided with the sensors 10A, 10B, 10C and 10D, they can detect an object existing within a predetermined distance in 360 degrees around each vehicle. For example, as illustrated in FIG. 1, the vehicle 100 can detect the vehicle 200 as an object by any one of the sensors 10. Specifically, the sensors 10 installed on the vehicle 100 detect that the vehicle 200, which is an object, exists around the vehicle 100. Further, the distance between the vehicle 100, which is own vehicle, and the vehicle 200, which is an object, is measured by the sensors 10 installed on the vehicle 100. Moreover, the azimuth from the vehicle 100, which is own vehicle, with respect to the vehicle 200, which is an object, is also measured by the sensors 10 installed on the vehicle 100. Further, the vehicle 100 can also detect pedestrians and obstacles and the like that exist around the vehicle 100 as objects by any one of the sensors 10.

Similarly, as illustrated in FIG. 1, the vehicle 200 can detect the vehicle 100 as an object by any one of the sensors 10. The vehicle 200 can also detect pedestrians, obstacles and the like that exist around the vehicle 200 as objects by any one of the sensors 10.

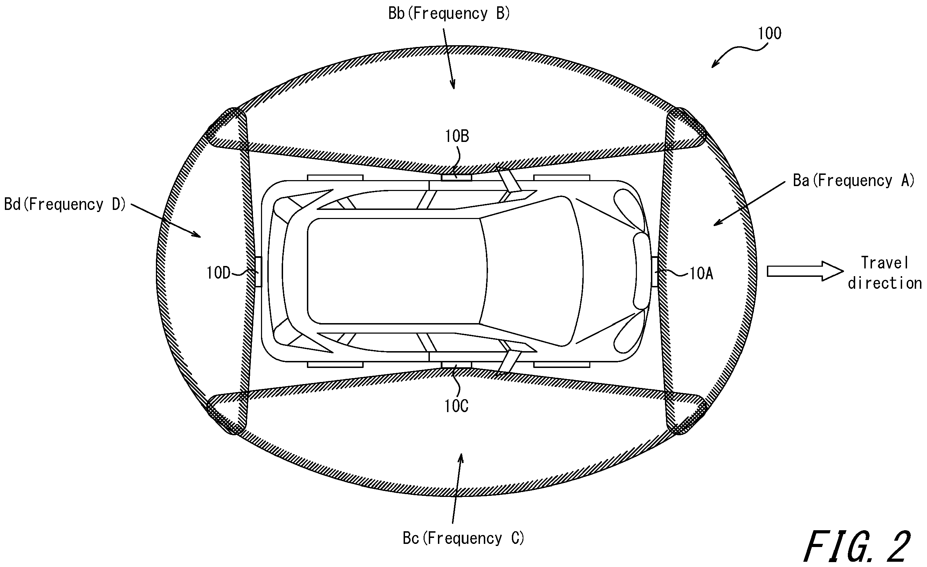

FIG. 2 is a diagram illustrating sensors according to an embodiment and transmission waves transmitted by the sensors.

FIG. 2 schematically illustrates a state where each of the sensors 10A, 10B, 10C and 10D installed on the vehicle 100 forms a beam of transmission wave. Each of the sensors 10 may typically be a radar (Radio Detecting and Ranging (RADAR)) sensor that transmits and receives radio waves. However, the sensors 10 are not limited to radar sensors. The sensors 10 according to an embodiment may be sensors based on a technique of Light Detection and Ranging, Laser Imaging Detection and Ranging (LIDAR) by light wave, for example. Further, the sensors 10 according to an embodiment may be sensors based on a technique of Sound Navigation and Ranging (SONAR) by sound wave, for example. Each sensor 10 can be configured by including a patch antenna and the like, for example. Configuration of each sensor 10 will be further described below.

As illustrated in FIG. 2, the sensor 10A installed on the front of the vehicle 100 forms a beam Ba of transmission wave in front of the vehicle 100. The frequency of transmission wave of the beam Ba is A, for example. The sensor 10B installed on the left side of the vehicle 100 forms a beam Bb of transmission wave on the left side of the vehicle 100. The frequency of the transmission wave of the beam Bb is B, for example. The sensor 10C installed on the right side of the vehicle 100 forms a beam Bc of transmission wave on the right side of the vehicle 100. The frequency of transmission wave of the beam Bc is C, for example. The sensor 10D installed on the back of the vehicle 100 forms a beam Bd of transmission wave on the back side of the vehicle 100. The frequency of transmission wave of the beam Bd is D, for example.

As illustrated in FIG. 2, the sensors 10 may each transmit a transmission wave so as to form a beam having a radiation angle close to 180 degrees. By using four such sensors 10, as illustrated in FIG. 2, all around the vehicle 100 is surrounded by the beams of the transmission waves of the sensors 10. On the other hand, the installation locations of the sensors 10 and the radiation angles of the sensors 10 are not limited to those illustrated in FIG. 2. For example, a sensor 10 having a radiation angle narrower than 180 degrees may be installed on the vehicle 100. In this case, all around the vehicle 100 may be surrounded by the beams of transmission waves of the sensors 10 by installing four or more sensors 10 on the vehicle 100. Further, when it is not necessary that all around the vehicle 100 is surrounded by the beams of the transmission waves of the sensors 10, the radiation angle of the beam by the sensor 10 may be narrowed or the number of the sensors to be installed may be appropriately decreased.

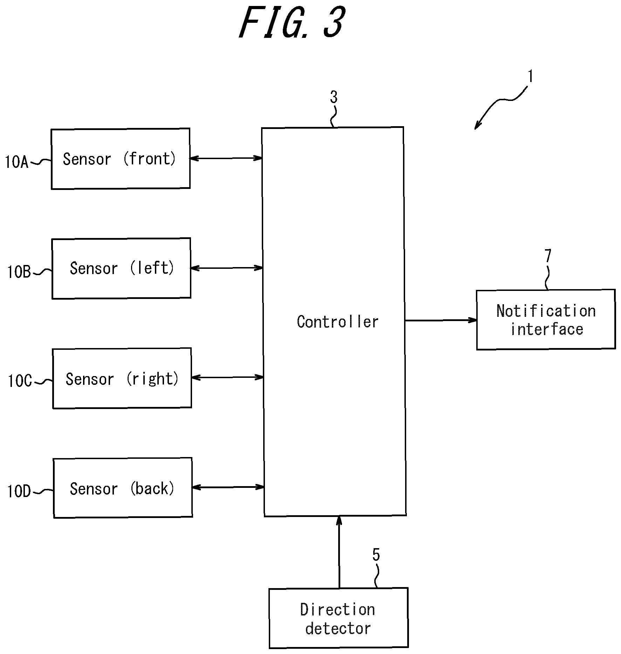

FIG. 3 is a function block diagram schematically illustrating a configuration of the electronic device according to an embodiment. The configuration of the electronic device according to an embodiment will be described below.

As illustrated in FIG. 3, the electronic device 1 according to an embodiment includes at least a controller 3. Each of the above described sensors 10A, 10B, 10C and 10D is connected to the controller 3. Furthermore, a direction detector 5 and a notification interface 7 are connected to the controller 3.

The controller 3 may include at least one processor such as a Central Processing Unit (CPU) to provide control and processing power to perform various functions. The controller 3 may be implemented collectively by one processor, may be implemented by some processors or by each individual processor. The processor may be implemented as a single integrated circuit. The processor may be implemented as a plurality of communicably connected integrated circuits and discrete circuits. The processor may be implemented based on other various known techniques. In an embodiment, the controller 3 may be configured as a CPU and a program executed by the CPU, for example. The controller 3 may appropriately include a storage such as a memory necessary for operating the controller 3. The storage may store a program executed by the controller 3, a result of processing executed by the controller 3, and the like. Further, the storage may function as a work memory of the controller 3. The operation of the controller 3 according to an embodiment will be described further below.

The direction detector 5 detects, for example, the direction of the vehicle equipped with the electronic device 1. The direction detector 5 may be an electronic compass and the like that detects geomagnetism. Further, the direction detector 5 may also acquire the position information of the electronic device 1 based on the Global Navigation Satellite System (GNSS) technology and the like. The GNSS technology may include any satellite positioning systems such as Global Positioning System (GPS), GLONASS, Galileo, Quasi-Zenith Satellite System (QZSS) and the like. For example, the direction detector 5 may include a positional information acquisition device such as a GPS module. In this case, the direction detector 5 may acquire the positional information of the electronic device 1 to detect the direction of the vehicle equipped with the electronic device 1, based on the change of the positional information over time. Further, the direction detector 5 may include a sensor such as a gyroscope instead of or together with the positional information acquisition device such as a GPS module. Further, for example, when a car navigation system is also installed in the vehicle equipped with the electronic device 1, the direction of the vehicle may be detected by the car navigation system.

In an embodiment, the direction detector 5 may detect, for example, which direction of the north, south, east and west the vehicle 100 equipped with the electronic device 1 faces. The controller 3 can thus acquire (the information of) the direction detected by the direction detector 5.

The notification interface 7 notifies the user of the electronic device 1 of the results of measurement and the like of the distance and/or the azimuth performed by the electronic device 1. Various configurations of the notification interface 7 can be assumed according to the information notified to the user. For example, when the results and the like of the measurement of the distance and/or the azimuth performed by the electronic device 1 are notified by the visual information such as characters and/or images, the notification interface 7 may be a display device such as a liquid crystal display (LCD), an organic EL display or an inorganic EL display. Further, for example, when the results and the like of the measurement of the distance and/or the azimuth performed by the electronic device 1 are notified by more concise visual information, the notification interface 7 may be a light-emitting device such as a light-emitting diode (LED) and the like. Further, for example, when the results and the like of the measurement of the distance and/or the azimuth performed by the electronic device 1 are notified by the auditory information such as sound or voice, the notification interface 7 may be any speaker or buzzer. The notification interface 7 may include at least one of the above described functions.

In an embodiment, when a predetermined object is detected within a predetermined distance and/or a predetermined angle around the vehicle 100, for example, the notification interface 7 may notify it by characters and/or images, and the like. Further, when a predetermined object is detected within a predetermined distance and/or a predetermined angle, the notification interface 7 may provide a display and the like that calls attention to the driver. Further, when a predetermined object is detected within a predetermined distance and/or a predetermined angle, the notification interface 7 may notify the position and/or the angle at which the predetermined object is detected around the vehicle 100 by characters and/or images. Moreover, when a predetermined object is detected within a predetermined distance and/or a predetermined angle, the notification interface 7 may display the distance between the predetermined object and the vehicle 100 by numerical values or image figures.

Further, in an embodiment, when a predetermined object is detected within a predetermined distance and/or a predetermined angle around the vehicle 100, for example, the notification interface 7 may only turn on a predetermined warning light. Furthermore, in an embodiment, when a predetermined object is detected within a predetermined distance and/or a predetermined angle around the vehicle 100, for example, the notification interface 7 may notify a predetermined warning and/or various kinds of information by voice information.

As a minimum configuration, the electronic device 1 according to an embodiment may include only the controller 3. On the other hand, the electronic device 1 according to an embodiment may include, other than the controller 3, at least one of the sensor 10, the direction detector 5 and the notification interface 7, as illustrated in FIG. 3. In this manner, the electronic device 1 according to an embodiment may be configured in various manners. Further, when the electronic device 1 according to an embodiment is mounted on the vehicle 100, the controller 3, the direction detector 5 and the notification interface 7 may each be installed in an appropriate position such as inside the vehicle 100. On the other hand, in an embodiment, at least one of the controller 3, the direction detector 5 and the notification interface 7 may be installed outside the vehicle 100.

Next, the sensor 10 according to an embodiment will be described. Hereinafter a case where the sensor 10 according to an embodiment is a radar sensor that transmits and receives a radio wave will be described.

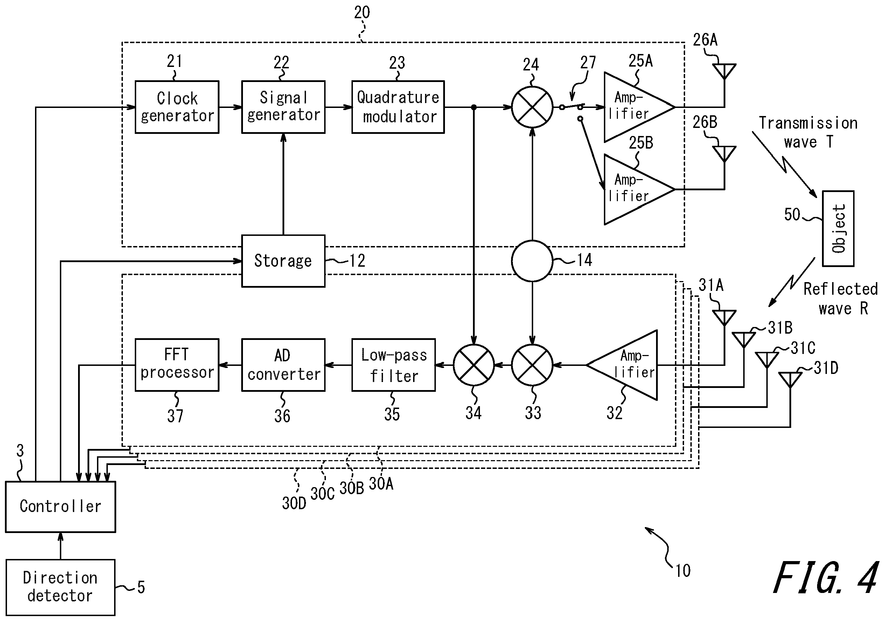

FIG. 4 is a function block diagram schematically illustrating a configuration of the sensor 10 according to an embodiment. The sensor 10 according to an embodiment will be described below with reference to FIG. 4. In FIG. 4, among the sensors 10A, 10B, 10C and 10D illustrated in FIGS. 1 to 3, one sensor 10 is illustrated as a representative example.

As illustrated in FIG. 4, the sensor 10 according to an embodiment mainly includes a transmitter 20 and a receiver 30. As illustrated in FIG. 4, the transmitter 20 of the sensor 10 according to an embodiment includes two transmission antennas 26A and 26B. In the following description, when the transmission antennas 26A and 26B are not distinguished, they are simply referred to as "transmission antenna 26." Further, as illustrated in FIG. 4, the sensor 10 according to an embodiment includes four receivers 30A, 30B, 30C and 30D. In the following description, when four receivers 30A, 30B, 30C and 30D are not distinguished, they are simply referred to as "receiver 30."

FIG. 4 schematically illustrates how the transmission antenna 26 of the transmitter 20 transmits a transmission wave T. In FIG. 4, the wave motion of the transmission wave T reflected by the object 50 is indicated as a reflected wave R. Here, the object 50 may be another vehicle other than the vehicle 100, such as a vehicle 200, or may be any object other than the vehicle 100, such as a pedestrian or an obstacle. FIG. 4 also schematically illustrates how the reception antenna 31 of the receiver 30 receives the reflected wave R. A storage 12 and a synthesizer 14 illustrated in FIG. 4 may be included in the transmitter 20 or in the receiver 30, or may be provided separately from the transmitter 20 or the receiver 30.

The synthesizer 14 is an oscillation circuit using an electronic microwave synthesis, and is a signal source for radar. The synthesizer 14 may be configured with, for example, a frequency synthesizer IC or a frequency synthesizer circuit.

The storage 12 may be configured with a semiconductor memory, a magnetic memory, and the like. The storage 12 may be connected to the controller 3. The storage 12 may store various kinds of information and programs executed by the controller 3. The storage 12 may function as a work memory for the controller 3. Further, the storage 12 may be included in the controller 3.

The transmitter 20 and the receiver 30, together with the storage 12 and the synthesizer 14, can be configured similar to known radar sensors, and can adopt a function part similar to that of known radar sensors. Therefore, hereinafter, the description similar to that of known radar sensors will be simplified or omitted as appropriate.

As illustrated in FIG. 4, the transmitter 20 may be configured by including, for example, a clock generator 21, a signal generator 22, a quadrature modulator 23, a mixer 24, a transmission amplifier 25, a transmission antenna 26 and a switch 27.

In the transmitter 20, the clock generator 21 generates a clock signal CLK under control of the controller 3. The clock signal generated by the clock generator 21 is supplied to the signal generator 22. Further, it is assumed that the storage 12 stores a transmission signal sequence generated based on the azimuth information detected by the direction detector 5 under control of the controller 3.

The signal generator 22 generates a transmission signal based on a clock signal generated by the clock generator 21 and a transmission signal sequence read from the storage 12. The signal generated by the signal generator 22 can be a Frequency Modulated Continuous Wave (FM-CW) system radar signal, for example. On the other hand, a signal generated by the signal generator 22 is not limited to the FM-CW system signals. Signals generated by the signal generator 22 may be, for example, various types of signals such as, for example, pulse system, pulse compression system (spread spectrum system), frequency CW (Continuous Wave) system or the like.

Further, when generating a transmission signal, the signal generator 22 assigns the frequency of the transmission signal under control of the controller 3, for example. In an embodiment, the band used when the signal generator 22 assigns the frequency of the transmission signal is determined as follows.

For example, when a 79 GHz band millimeter-wave radar is used, it is specified that a millimeter wave having a bandwidth of 4 GHz, that is, a 4 GHz band assigned to a band from 77 GHz to 81 GHz is used. In this case, a 4 GHz band assigned to a band from 77 GHz to 81 GHz may be used. Further, in this case, as a part of the 4 GHz band assigned to the band from 77 GHz to 81 GHz, a 1 GHz band may be used, for example. A transmission signal generated by the signal generator 22 is supplied to the quadrature modulator 23. It should be noted that, in the following description, a millimeter wave having a bandwidth of xGHz is also referred to as a millimeter wave of xGHz band, where x is any number. Further, in the following description, a bandwidth xGHz is also referred to as xGHz band, where x is any number.

The quadrature modulator 23 performs quadrature modulation of the transmission signal supplied from the signal generator 22. The signal quadrature-modulated by the quadrature modulator 23 is supplied to the mixer 24 of the transmitter 20 and the mixer 34 of the receiver 30.

The mixer 24 is connected to the transmission amplifier 25A or 25B through the switch 27. The mixer 24 mixes the signal that is quadrature-modulated by the quadrature modulator 23 with the signal supplied from the synthesizer 14 to perform frequency conversion, and increases the frequency of the transmission signal up to the center frequency of millimeter wave. The transmission signal that is frequency-converted by the mixer 24 is supplied to the transmission amplifier 25A or 25B.

The transmission amplifier 25A is connected to the transmission antenna 26A. Further, the transmission amplifier 25B is connected to the transmission antenna 26B. In the following description, when the transmission amplifiers 25A and 25B are not distinguished, they are simply referred to as "transmission amplifier 25." The transmission amplifier 25 increases the transmission power of the transmission signal whose frequency is converted by the mixer 24. The transmission signal whose transmission power is increased by the transmission amplifier 25 is transmitted, as a transmission wave T, from the transmission antenna 26. In an embodiment, the transmission wave T is transmitted from at least one of the transmission antennas 26A and 26B.

The switch 27 switches an antenna that transmits a transmission wave T between the transmission antennas 26A and 26B. The switch 27 may switch the transmission antenna 26 that transmits a transmission wave T under control of the controller 3, for example.

As illustrated in FIG. 4, when the object 50 exists within a range in which the transmission wave T transmitted by the transmission antenna 26 reaches, a part of the transmission wave T is reflected by the object 50 and becomes a reflected wave R.

FIG. 4 illustrates a receiver 30A provided with a reception antenna 31A, a receiver 30B provided with a reception antenna 31B, a receiver 30C provided with a reception antenna 31C and a receiver 30D provided with a reception antenna 31D together. Hereinafter, one receiver 30 of the receivers 30A, 30B, 30C and 30D will be described as a representative example. Each of the receivers 30A, 30B, 30C and 30D may have the same configuration.

As illustrated in FIG. 4, the receiver 30 can be configured by including, for example, a reception antenna 31, a reception amplifier 32, a mixer 33, a mixer 34, a low-pass filter 35, an AD converter 36 and an FFT processor 37.

In the receiver 30, the reception antenna 31 receives a reflected wave R. In greater detail, in an embodiment, the reflected wave R is received by at least any one of the reception antennas 31A, 31B, 31C and 31D. A received signal based on the reflected wave R received by the reception antenna 31 is supplied to the reception amplifier 32. The reception amplifier 32 may be a low-noise amplifier, and amplifies the received signal supplied from the reception antenna 31 with low noise. The received signal amplified by the reception amplifier 32 is supplied to the mixer 33.

The mixer 33 mixes the received signal of RF frequency supplied from the reception amplifier 32 with the signal supplied from the synthesizer 14 for frequency conversion to decrease the frequency of the received signal to the IF frequency. The transmission signal that is frequency-converted by the mixer 33 is supplied to the mixer 34.

The mixer 34 multiplies the transmission signal that is frequency-converted by the mixer 33 with the signal that is quadrature-modulated by the quadrature modulator 23 to generate a beat signal. The beat signal generated by the mixer 34 is supplied to the low-pass filter 35.

The low-pass filter 35 removes the noise of the beat signal supplied from the mixer 34. The beat signal whose noise is removed by the low-pass filter 35 is supplied to the AD converter 36.

The AD converter 36 may be any Analog to Digital Converter (ADC). The AD converter 36 digitizes an analog beat signal whose noise is removed by the low-pass filter 35. The beat signal digitized by the AD converter 36 is supplied to the FFT processor 37.

The FFT processor 37 may be configured with any circuit or chip that performs Fast Fourier Transform (FFT) processing. The FFT processor 37 performs FFT processing to a beat signal digitized by the AD converter 36. The result of FFT processing by the FFT processor 37 is supplied to the controller 3.

As a result of the FFT processing of the beat signal by the FFT processor 37, a frequency spectrum is acquired. From the frequency spectrum, the controller 3 can determine whether or not the predetermined object 50 exists within a range of a beam emitted by the sensor 10. That is, the controller 3 can determine whether or not the predetermined object 50 exists within a range of a beam emitted by the sensor 10, based on the FFT-processed beat signal. Further, when the predetermined object 50 exists, the controller 3 can also measure a distance between the sensor 10 and the object 50 based on the FFT-processed beat signal. Moreover, when the predetermined object 50 exists, the controller 3 can also determine a positional relationship between the sensor 10 and the object 50 based on the FFT-processed beat signal. In this manner, in an embodiment, a distance from the object 50 may be measured based on a beat signal acquired from a signal transmitted as a transmission wave T and a signal received as a reflected wave R. For example, since a distance measurement technique for measuring a distance based on a beat signal acquired using a millimeter wave radar of 79 GHz band, for example, is known, a more detailed description will be omitted.

Further, when the predetermined object 50 exists, the controller 3 can also determine the azimuth from the sensor 10 with respect to the the object 50 based on a FFT-processed beat signal. In this manner, in an embodiment, based on a beat signal acquired from a signal transmitted as a transmission wave T and a signal received as a reflected wave R, the azimuth with respect to the object 50 may be measured. In this case, the controller 3 may measure the azimuth with respect to the object 50 by comparing with the direction of the electronic device 1 detected by the direction detector 5. Further, the electronic device 1 measures not only the azimuth with respect to the object 50. In an embodiment, the electronic device 1 may also measure the direction or the azimuth of the sensor 10 of the electronic device 1 with respect to the object 50. For example, since the angle measurement technique for measuring the azimuth relative to a predetermined object based on a beat signal acquired by using a millimeter wave radar such as 79 GHz band, for example, is also known, a more detailed description will be omitted.

Next, a virtual array antenna configured with the sensor 10 according to an embodiment will be described.

In an embodiment, one sensor 10 may have a plurality of antennas. Further, in an embodiment, when one sensor 10 includes a plurality of at least one of the transmission antennas 26 and the reception antennas 31, it can be functioned as a virtual array antenna composed of these antennas. The configuration of such antenna will be described below.

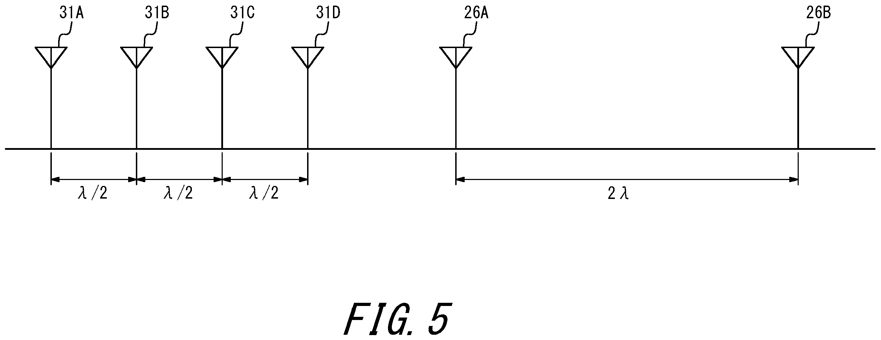

FIG. 5 schematically illustrates a virtual array antenna configured with the sensor 10 according to an embodiment. FIG. 5 illustrates a virtual array antenna composed of two transmission antennas 26 and four reception antennas 31 included in the sensor 10 illustrated in FIG. 4.

As illustrated in FIG. 5, the sensor 10 includes two transmission antennas 26A and 26B and four reception antennas 31A, 31B, 31C and 31D. In an embodiment, by arranging these antennas side by side at a predetermined interval, a virtual array antenna that functions as a maximum of 2 x 4 = 8 pieces of antennas is configured.

The above described example is generalized and, for example, it is assumed that, when a millimeter-wave radar radio wave is transmitted and received, M pieces of transmission antennas 26 and N pieces of reception antennas 31 are disposed. Here, as illustrated in FIG. 5, M pieces of transmission antennas 26 are disposed at an interval of (λ/2) x N = 2λ. In this manner, when a plurality (M pieces) of transmission antennas 26 is disposed, a transmission wave T is transmitted from a plurality of transmission antennas 26 temporally in order.

Further, as illustrated in FIG. 5, N pieces of reception antennas 31 are disposed at an interval of λ/2. When there is a plurality (N pieces) of reception antennas 31 disposed in the above described manner, a reflected wave R is received from a plurality of reception antennas 31 temporally in order. The received signal thus received can be regarded as a received signal transmitted and received by using N x M pieces of antennas. In this manner, in an embodiment, the number of antennas functioned as a virtual array antenna may be M x N where the number of antennas for transmitting a transmission wave T is M and the number of antennas for receiving a reflected wave R is N.

In this manner, the arrival direction of the reflected wave R can be estimated, by using a known algorithm, from signals transmitted and received by the transmission antennas 26 and the reception antennas 31 functioned as a N × M pieces of virtual array antennas. As an algorithm for estimating the arrival direction, for example, the Estimation of Signal Parameters via Rotational Invariance Techniques (ESPRIT), the MUltiple SIgnal Classification (MUSIC) and the like are known. In general, in estimation of the arrival direction, as the number of antennas used for transmission and reception increases, the angular resolution improves and at the same time the number of objects whose angle can be measured increases.

The electronic device 1 according to an embodiment operates by allowing the number of antennas used for transmitting the transmission wave T and receiving the reflected wave R to be changeable. Specifically, the electronic device 1 can operate in an operation mode in which the number of antennas used for transmission of transmission wave T and reception of reflected wave R is a first predetermined number (hereinafter appropriately described as "a first mode"). The electronic device 1 can also operate in an operation mode in which the number of antennas used for transmission of transmission wave T and reception of reflected wave R is a second predetermined number that is larger than the first predetermined number (hereinafter appropriately described as "a second mode"). Here, the number of antennas used for transmission of transmission wave T and reception of reflected wave R may be the number of antennas functioned as the above described virtual array antenna or the number of antennas actually installed. For example, the second mode may be an operation mode in which the virtual array antenna illustrated in FIG. 5 functions as eight pieces of antennas in maximum. In this case, the first mode may be an operation mode in which the number of antennas used is any numbers smaller than eight pieces. For example, the first mode may be four pieces of antennas, which is half of eight pieces of antennas. Further, for example, the first mode may be one piece of antenna, which is a minimum configuration of eight pieces of antennas.

In the electronic device 1 according to an embodiment, the controller 3 controls so that signals are transmitted and received by using the number of antennas set to be used in each operation of the first mode and the second mode. For example, in each of the first mode and the second mode, the controller 3 may set so that signals are transmitted and received by using any number of antennas from the maximum number to the minimum number of the number of antennas actually installed. Further, for example, in each of the first mode and the second mode, the controller 3 may set so that signals are transmitted and received by using any number of antennas from the maximum number to the minimum number of the number of antennas functioned as a virtual array antenna.

In this manner, in an embodiment, the number of antennas used for transmission of transmission wave T and reception of reflected wave R in the first mode may be the number of antennas functioning as a virtual array antenna composed of the transmission antennas 26 and the reception antennas 31. In this case, the number of antennas used for transmission of transmission wave T and reception of reflected wave R in the first mode may be the minimum number, for example, of the number of the antennas functioning as a virtual array antenna. In the same manner, the number of antennas used for transmission of transmission wave T and reception of reflected wave R in the second mode may be the number of antennas functioning as a virtual array antenna composed of the transmission antennas 26 and the reception antennas 31. In this case, the number of antennas used for transmission of transmission wave T and reception of reflected wave R in the second mode may be the maximum number, for example, of the number of antennas functioning as a virtual array antenna.

Next, operation of the electronic device 1 according to an embodiment will be described.

As described above, the electronic device 1 measures the azimuth with respect to the object 50 based on the signal transmitted as a transmission wave T and the signal of the transmission wave T reflected by the object 50 and received as a reflected wave R. Further, the electronic device 1 can operate in the first mode and the second mode described above. Here, in the first mode, the azimuth is measured by using the number of antennas that is fewer than that used in the second mode. Therefore, in the measurement in the first mode, although the power consumption for measurement is relatively low, the angular resolution of measurement is relatively low. On the other hand, in the second mode, the azimuth is measured by using the number of antennas that is larger than that used in the first mode. Therefore, in the measurement in the second mode, although the angular resolution of measurement is relatively high, the power consumption for measurement is relatively high. Thus, in an embodiment, the controller 3 controls so that the first mode and the second mode is switchable. Hereinafter operation of the electronic device 1 according to an embodiment will be further described.

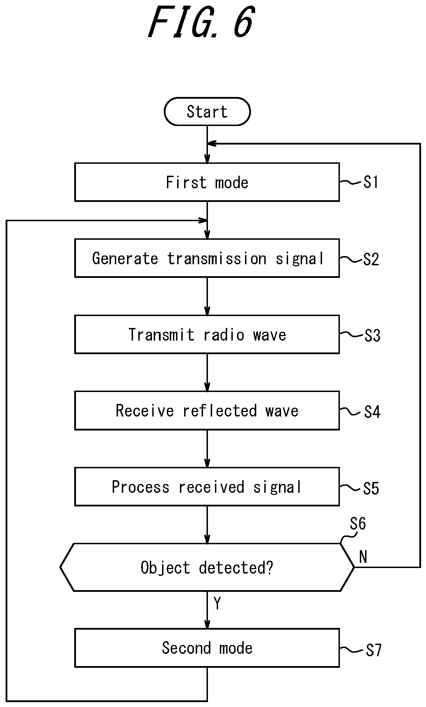

FIG. 6 is a flowchart illustrating operation of the electronic device 1 according to an embodiment.

The process illustrated in FIG. 6 may be started when the azimuth with respect to a predetermined object is measured by the electronic device 1, for example.

When the process illustrated in FIG. 6 is started, first, the controller 3 controls to set the operation mode of the electronic device 1 to the first mode (step S1). That is, in step S1, the controller 3 is set to an operation mode in which a signal is transmitted and received by using a fewer number of antennas than that used in the second mode such as one piece of antenna, for example. As described above, in the operation of the first mode, although the angular resolution of measurement is relatively low, the power consumption of measurement is relatively low. Therefore, the electronic device 1 can suppress the power consumption for the normal operation.

When the operation mode is set to the first mode in step S1, the controller 3 controls to generate a transmission signal transmitted from the sensor 10 (step S2). In step S2, principally, a transmission signal is generated by performing from the operatioin by the clock generator 21 of the transmitter 20 to the operation by the transmission amplifier 25 illustrated in FIG. 4. Hereinafter further description will be omitted for the description already illustrated with reference to FIG. 4.

When a transmission signal is generated in step S2, the controller 3 controls to transmit the transmission signal from the transmission antenna 26 by radio wave (step S3). In step S3, principally, a radio wave is transmitted by performing from the operatioin by the transmission amplifier 25 to the operation by the transmission antenna 26 illustrated in FIG. 4. In step S3, the transmission antenna 26 transmits a signal by using a fewer number of antennas than that used in the second mode such as one piece of antenna, for example. The number of antennas fewer than that used in the second mode is not limited to one, and any number larger than one may be used.

When the electronic device 1 transmits a signal from a plurality of sensors 10, in steps S2 and S3, the controller 3 may control so that a plurality of sensors 10 transmit a signal not simultaneously but sequentially.

When a radio wave is transmitted in step S3, the controller 3 controls to receive a reflected wave from the reception antenna 31 (step S4). In step S4, principally, the reflected wave is received by performing from the operation by the reception antenna 31 to the operation by the reception amplifier 32 of the receiver 30 illustrated in FIG. 4. Here, as described above, the reception antenna 31 receives a reflected wave, reflected by the object 50, of the transmission wave transmitted from the transmission antenna 26. In step S4, the reception antenna 31 receives a signal by using a fewer number of antennas than that used in the second mode such as one piece of antenna, for example. The fewer number of antennas than that used in the second mode is not limited to one, and any number larger than one piece may be used.

When the reflected wave is received in step S4, the controller 3 controls to process a received signal based on the received reflected wave (step S5). In step S5, principally, the received signal is processed by performing from the operation by the reception amplifier 32 to the operation by the FFT processor 37 illustrated in FIG. 4. The controller 3 can recognize whether or not the predetermined object 50 exists within a predetermined distance from the sensor 10 by the operation in step S5. Further, by the operation in step S5, when the predetermined object 50 exists within a predetermined distance from the sensor 10, the controller 3 can also recognize a distance from the sensor 10 to the predetermined object 50. Here, as described above, the predetermined object 50 may be various objects such as surrounding vehicles (vehicles in front of and behind the same lane or vehicles coming from the opposite direction), pedestrians and obstacles.

When the received signal is processed in step S5, the controller 3 determines whether or not the object 50 is detected within the predetermined distance (step S6). In step S6, the predetermined distance may be determined in consideration of a distance at which, for example, the vehicle 100 equipped with the electronic device 1 can stop safely without crashing into the object 50. Further, this predetermined distance may be a specified value or a variable value. In general, when the vehicle 100 is an automobile and the like, the braking distance increases as the traveling speed increases. Therefore, for example, the controller 3 may control so that the predetermined distance increases as the moving speed of the vehicle 100 equipped with the electronic device 1 increases. An example of a specific technique for determining whether or not the object 50 is detected within a predetermined distance in step S6 will be further described later.

When determining that the object 50 is not detected within a predetermined distance in step S6, the controller 3 returns the process to step S1 to continue the operation of the first mode (measurement of an angle). On the other hand, when determining that the object 50 is detected within a predetermined distance in step S6, the controller 3 controls to set the operation of the electronic device 1 to the second mode (step S7). That is, in step S7, the controller 3 is set to an operation mode in which a signal is transmitted and received by using a larger number of antennas than that used in the first mode, such as eight pieces of antennas, for example. As described above, in the operation in the second mode, although the consumption power for measurement is relatively large, the angular resolution of measurement is relatively high. Therefore, in this case, the electronic device 1 can improve the measurement accuracy in measurement of the azimuth. The number of antennas used in the second mode is not limited to eight, and any number larger than two pieces , that is larger than that used in the first mode, may be used.

When the operation mode is set to the second mode in step S7, the controller 3 performs operations from step S2 to step S5 to transmit a transmission signal as a transmission wave, and processes a received signal based on a received reflected wave. In this manner, the electronic device 1 can improve the measurement accuracy in the measurement of azimuth. Further, in the second mode, improvement of the angular resolution enables the electronic device 1 to simultaneously measure each angle of a plurality of objects.

In this manner, in an embodiment, the controller 3 controls the first mode and the second mode so as to be switchable. Further, in an embodiment, in the first mode, when the object 50 is detected within a predetermined distance, the controller 3 controls to switch to the second mode.

As described above, in the electronic device 1 according to an embodiment, since signal transmission and reception using a relatively large number of antennas will not be performed all the time, consumption power can be reduced. Further, in the electronic device 1 according to an embodiment, while a predetermined object 50 is not detected within a predetermined distance, rough angle measurement with relatively low angular resolution is performed. On the other hand, in the electronic device 1 according to an embodiment, when a predetermined object 50 is detected within a predetermined distance, precise angle measurement with high angular resolution is performed. Therefore, in the electronic device 1 according to an embodiment, the measurement efficiency can be improved without decreasing the desired measurement accuracy, thus the convenience can be improved.

Next, determination whether or not the object 50 is detected within a predetermined distance will be further described in relation to step S6 in FIG. 6.

Generally, Constant False Alarm Rate (CFAR) processing is known as a technique for automatically detecting a target in radar signal processing. It is also known that Cell Averaging (CA) CFAR processing is effective when a received signal includes a target signal and a white noise such as a receiver noise and the like.

As described above, in the electronic device 1 according to an embodiment, when the FFT processor 37 applies FFT processing to a beat signal acquired as a result of the processing of the mixer 34 illustrated in FIG. 4, a frequency spectrum is acquired. Thus, in an embodiment, the controller 3 may determine that the object 50 is detected within a predetermined distance when, in the frequency spectrum thus acquired, a ratio of a peak and an average noise power of the surrounding excluding the peak and its adjacent exceeds a threshold. Here, the average noise power in the frequency spectrum varies with time. Therefore, the threshold of the ratio of the peak and the average noise power may be a variable threshold that also varies with time.

In this manner, in an embodiment, when a ratio of a peak in a frequency spectrum acquired based on a beat signal and an average noise power of the surrounding excluding the peak and its adjacent in the frequency spectrum exceeds a predetermined threshold, the controller 3 may determine that the object 50 is detected within a predetermined distance.

Although this disclosure has been described on the basis of the drawings and the examples, it is to be noted that various changes and modifications may be made easily by those who are ordinarily skilled in the art based on this disclosure. Accordingly, it is to be noted that such changes and modifications are included in the scope of this disclosure. For example, functions and the like included in each functional portion can be rearranged without logical inconsistency. A plurality of functional portions can be combined into one or divided. Each embodiment according to the above described disclosure is not limited to being faithfully implemented in accordance with the above described each embodiment, and may be implemented by appropriately combining each feature or omitting a part thereof. That is, those who are ordinarily skilled in the art can make various changes and modifications to the contents of this disclosure based on this disclosure. Therefore, such changes and modifications are included in the scope of this disclosure. For example, each function, each component, each step and the like may be added to another embodiment without logical inconsistency, or replaced with each function, each component, each step and the like of another embodiment. Further, in each embodiment, a plurality of functions, components or steps can be combined into one or divided. Moreover, each embodiment according to the above described disclosure is not limited to being faithfully implemented in accordance with the above described each embodiment, and may be implemented by appropriately combining each feature or omitting a part thereof.

The above described embodiment is not limited to only an implementation as the electronic device 1. For example, the above described embodiment may be implemented as a control method of a device such as the electronic device 1. Furthermore, for example, the above described embodiment may be implemented as a control program of a device such as the electronic device 1.

Further, for example, in the above described embodiment, an example of measuring the azimuth based on transmission and reception of a radio wave has been described. However, as described above, in an embodiment, the azimuth may be measured based on transmission and reception of a light wave or transmission and reception of a sound wave.

### REFERENCE SIGNS LIST

- 1: Electronic device
- 3: Controller
- 5: Direction detector
- 7: Notification interface
- 10: Sensor
- 12: Storage
- 14: Synthesizer
- 20: Transmitter
- 21: Clock generator
- 22: Signal generator
- 23: Quadrature modulator
- 24, 33, 34: Mixer
- 25: Transmission amplifier
- 26: Transmission antenna
- 27: Switch
- 30: Receiver
- 31: Reception antenna
- 32: Reception amplifier
- 35: Low-pass filter
- 36: AD converter
- 37: FFT processor
- 50: Object
- 100, 200: Vehicle

## Claims

1. An electronic device, comprising
a transmitter configured to transmit a transmission wave;
a receiver configured to receive a reflected wave of the transmission wave reflected by an object; and
a controller configured to control so that a first mode in which the number of antennas used for transmitting the transmission wave and receiving the reflected wave is a first predetermined number and a second mode in which the number of antennas is a second predetermined number that is larger than the first predetermined number can be switched, wherein
the controller controls to switch to the second mode when the object is detected within a predetermined distance in the first mode.

2. The electronic device according to claim 1, wherein at least one of the first predetermined number and the second predetermined number is the number of antennas that function as a virtual array antenna composed of an antenna configured to transmit the transmission wave and an antenna configured to receive the reflected wave.

3. The electronic device according to claim 2, wherein the number of antennas that function as the virtual array antenna is M x N, where M is the number of antennas configured to transmit the transmission wave and N is the number of antennas configured to receive the reflected wave.

4. The electronic device according to claim 2 or 3, wherein the first predetermined number is a minimum number of the number of antennas that function as the virtual array antenna.

5. The electronic device according to any one of claims 2 to 4, wherein the second predetermined number is a maximum number of the number of antennas that function as the virtual array antenna.

6. The electronic device according to any one of claims 1 to 5, wherein azimuth with respect to the object is measured based on a beat signal acquired from a signal transmitted as the transmission wave and a signal received as the reflected wave.

7. The electronic device according to claim 6, wherein the controller determines that the object is detected within a predetermined distance when a ratio of a peak in a frequency spectrum acquired based on the beat signal and an average noise power of a surrounding excluding the peak and an adjacent area of the peak in the frequency spectrum exceeds a predetermined threshold.

8. The electronic device according to any one of claims 1 to 7, wherein the controller measures azimuth with respect to the object based on a signal transmitted as the transmission wave and a signal received as a reflected wave of the transmission wave reflected by the object.

9. A control method, comprising the steps of:
transmitting a transmission wave;
receiving a reflected wave of the transmission wave reflected by an object; and
controlling so that a first mode in which the number of antennas used for transmitting the transmission wave and receiving the reflected wave is a first predetermined number and a second mode in which the number of antennas is a second predetermined number that is larger than the first predetermined number can be switched, wherein
in the step of controlling, controlling to switch to the second mode when the object is detected within a predetermined distance in the first mode.

10. A control program of an electronic device configured to cause a computer to execute the steps of:
transmitting a transmission wave;
receiving a reflected wave of the transmission wave reflected by an object; and
controlling so that a first mode in which the number of antennas used for transmitting the transmission wave and receiving the reflected wave is a first predetermined number and a second mode in which the number of antennas is a second predetermined number that is larger than the first predetermined number can be switched, wherein
in the step of controlling, controlling to switch to the second mode when the object is detected within a predetermined distance in the first mode.
